# EUROPEAN PATENT APPLICATION

(11) **EP 3 382 249 A1**
(43) Date of publication of application: **03.10.2018**
(21) Application number: 18164764.5
(22) Date of filing: 28.03.2018
(51) Int. Cl.: F16K 35/02, F16K 35/04, F16K 35/06

(54) **SAFETY VALVE**

(30) Priority: 29.03.2017 IT 201700034730
(71) Applicant: Greiner S.p.A., 25065 Lumezzane (BS) (IT)
(72) Inventor: LENA, Roberto, I-25065 Lumezzane BS (IT); ASTORI, Giorgio, I-25065 Lumezzane BS (IT)
(74) Representative: Marietti, Andrea

(57) **Abstract**

A shut-off valve (1) for stopping a fluid flow is described, of the type comprising a main valve body (10), a shutter (4) rotatably assembled in said main body valve (10) and an activating cap (8), said shutter (4) being connected by a stem (7) to said activating cap (8) to rotate the shutter (4) between an open position of the valve for the passage of the fluid flow and a closed position of the valve in which the fluid flow is stopped, said valve (1) comprising reversible inhibiting means to inhibit the rotation of said activating cap (8) when said activating cap (8) is in a predetermined position, characterized in that said reversible inhibiting means comprise at least one locking member (15, 16) housed in at least one housing seat (17, 18) made in said activating cap (8), said at least one locking member (15, 16) being movable between a retracted position in which the rotation of the activating cap (8) is allowed and an extended position in which part of said at least one locking member (15, 16), protruding from the activating cap (8), gets into at least one accommodating seat made on said main valve body (10) so that the rotation of the activating cap (8), with respect to the main valve body (10), is prevented, and in that it comprises unlocking permission means to permit the unlocking, which are designed to move said at least one locking member (15, 16) from said extended position to said retracted position. A method and a system for locking and unlocking the valve (1) are described as well, said system comprising an unlocking tool couplable with said activating cap to move said at least one locking member (15, 16) of said valve away from the main valve body (10) of said valve.

## Description

### Field of the Invention

The present invention relates to a shut-off valve for at least partially stopping a fluid flow in a duct. Such an invention is particularly applied in the field of the shut-off safety valves for stopping for example the gas flow in the riser columns, or in distribution ducts, of the gas mains of domestic or industrial type. The valve according to this invention is also applied where there is the need for blocking and/or sometimes restricting a fluid flow (for example gas or water), so as to prevent the same valve from being incidentally or fraudulently activated.

### Known Prior Art

Shut-off valves are known which usually allow stopping a fluid flow (for example gas or water) in the distribution riser column, or other ducts, so as to prevent the fluid from flowing towards the user or users placed downstream and branching from the riser column or the distribution duct. Think for example to a gas distribution column, in an apartment building, by means of which all the users of the respective individual homes are supplied, or to the domestic water distribution duct supplying the several draw-off points inside a home.

Typically, the riser columns, and also other different fluid distribution ducts, are provided with shut-off ball valves, which can be manually operated by an actuating cap or by an actuating handle which, fastened to the activating stem of the ball shutter, drives the rotation of the shutter itself positioned inside the valve body between a closed position and an open position.

In order to ensure suitable safety levels, in particular in case of emergency, safety valves provided with reversible inhibiting means to inhibit the rotation of the shutter are known, which comprise movable pins housed in one or more housing seats obtained in the valve body. Inside the housing seats of the valve body there are springs, or other elastic means, designed to push the pins towards the activating cap. When the cap is in a given predetermined position (for example the valve closed position), the pins are engaged in respective accommodating seats made in the cap, thus locking the rotation of the cap itself with respect to the valve body. In order to unlock the rotation of the cap, it is also known to push the pins towards the valve body by means of an appropriate tool provided with protrusions adapted to be inserted in through-holes provided on the same cap at the afore said accommodating seats.

Such valves are particularly effective when the need occurs of rapidly closing the valve of the riser column so as to prevent the passage of fluid (for example gas) to all the downstream users, such as for example in case of emergency or danger situations (for example in case of fire).

Especially in the latter situation, it is required that anyone can close the shut-off valve of the riser column, so that the gas can be prevented from dangerously flowing in the column and thus to the individual users branching therefrom.

Furthermore, in case of emergency the need occurs of preventing the valve from being incidentally re-opened, once it has been closed, and thus preventing the gas from passing in the riser column when the fire has not been completely extinguished yet.

Indeed, in the challenging steps of the emergency situation, in which operating is made difficult by the presence of flames or smoke, a person or rescuer could not be able, for example since physically hampered by smoke or flames, to acknowledge that the shut-off valve of the riser column has already been placed in closed position and therefore he/she unknowingly re-opens the same.

The consequences of such an operation would be very dangerous and would again lead to the passage of gas inside the riser column and therefore to the distribution thereof to all the users.

Note however that in such emergency situations there is the possibility, albeit an off-chance one, that an ill-intentioned person, or simply an unauthorized operator, can be provided with unapproved tools - for example simply rods with suitable thickness - to unlock the movable pins of the reversible inhibiting means to inhibit the rotation and re-open in this way the valve, with potentially dangerous consequences.

Note that also in case of shut-off valves applied to a riser column or a duct distributing another fluid, for example water, various cases can occur (for example a fire, or the need for a fluid distribution to be prevented from being incidentally stopped) in which the shut-off valve is required to be arranged in closed or open position and to hold this position, until authorized personnel is able to change the valve position by a proper spanner.

Safety valves with means inhibiting the rotation of the shutter can also be installed upstream of the hydraulic system (preferably at the meter inlet) of each home, such that the company managing the water or gas distribution can send an operator to shut down the service in inhabited homes or where a defaulter is present.

The afore mentioned safety valves can however be relatively easily tampered in order to unlock the shutter rotation. For example, anyone could insert nails, rods or similar elements inside the through holes of the cap to push the locking pins towards the valve body. In this way, the locking pins can be easily moved by counteracting the elastic force of the springs until unlocking the rotation of the valve cap and the respective actuator.

### Summary of the invention

Object of the present invention is to solve the afore mentioned problems and to provide a shut-off valve that is able to ensure a safety level higher than the presently used valves.

Further object of the present invention is to provide a shut-off valve, as well as a relevant locking and unlocking system, that is able to prevent the valve from being activated when the latter has reached a predetermined position and which is difficult to be tampered after it has reached the afore said predetermined locking position. Specifically, object of the present invention is to provide a shut-off valve provided with reversible inhibiting means to inhibit the rotation of the respective rotatable shutter which can be locked in a predetermined closed or open position and which can be unlocked only by operators equipped with unlocking tools not easily available on the market.

These and additional objects are obtained by the present invention by a shut-off valve for stopping a fluid flow according to claim 1, a relevant locking and unlocking system according to claim 13, and a locking and unlocking method for a shut-off valve for stopping a fluid flow according to claim 15. Preferred aspects are set forth in the dependent claims.

In particular, the shut-off valve for stopping a fluid flow according to the present invention is of the type comprising a main valve body, a shutter rotatably mounted in the main valve body and an activating cap. The shutter is connected to the cap by an activating stem allowing the shutter to be rotated between an open position of the valve for the passage of a fluid flow and a closed position of the valve in which the fluid flow is stopped. The valve also comprises reversible inhibiting means to inhibit the rotation of the activating cap when the cap is in a predetermined position. According to an aspect of the present invention, such reversible inhibiting means comprise at least one movable locking member - such as for example at least one pin - housed in at least one housing seat made in the activating cap. The locking member is movable between a retracted position in which the rotation of the cap is allowed and an extended position in which part of the locking member, protruding from the activating cap, gets into a corresponding accommodating seat made on the main valve body so that the rotation of the activating cap, with respect to such main valve body, is prevented.

According to an aspect of the present invention, the housing seat accommodating the locking member is shaped to allow, in use, the locking member to protrude from the activating cap only from an outer surface of the same activating cap, said outer surface facing towards the surface of the valve body on which the respective accommodating seat is made.

The valve further comprises unlocking permission means to permit the unlocking, which are designed to allow the locking member to be moved from the extended position to the retracted position.

Upon locking the valve in the predetermined position, the locking member could be brought back to the retracted position, which allows the cap to be rotated, by moving it away from the valve body thanks to a proper unlocking tool, as it will be seen in what follows.

Specifically, according to an aspect of the present invention, the afore said unlocking permission means allow the locking member to be moved towards its retracted position by pull only and not by push and, as it will be seen, such a feature allows making the valve tampering hardly possible.

Thanks to the present invention the same safety valve can be thus used to lock the rotation of the activating cap in a predetermined position in both an emergency case and in case of a defaulter user, thus allowing higher safety than the previous known art.

Preferably, the reversible inhibiting means comprise elastic means designed to automatically push the locking member into the corresponding accommodating seat made on the valve body and hold it in the extended position. More preferably, the elastic means are arranged in at least one housing seat of the activating cap. Advantageously, the elastic means comprise at least one helical spring.

According to an additional aspect of the present invention, the unlocking permission means comprise at least one access opening made in the activating cap in communication with at least one housing seat of the locking movable element of the activating cap.

According to an aspect of the present invention, the access opening is made on an outer surface of the activating cap opposed to the outer surface of the cap, said outer surface facing towards the valve body surface on which the accommodating seat for the locking member is made. Preferably, the access opening comprises at least one through hole having longitudinal axis substantially coincident with the movement direction (between the extended position and the retracted position) of the unlocking member. According to an aspect of the present invention, the access opening is shaped to prevent the locking member from protruding from the outer surface of the activating cap opposed to the outer cap surface facing towards the valve body surface on which the respective accommodating seat is made.

According to an aspect of the present invention, at least one portion of the access opening has such size to prevent the locking member from passing through the same. In other words, the section of at least one portion of the access opening has smaller size than the section of the locking member.

According to a peculiar aspect of the present invention, the unlocking permission means also comprise at least one threaded hole made in the locking member. The threaded hole has preferably the longitudinal axis substantially coincident with the movement direction of the locking member.

Advantageously, the valve according to the present invention comprises one or more locking members (preferably made of one or more pins) arranged parallel to the activating stem connecting the cap to the shutter.

Preferably, the afore said predetermined locking position of the shut-off valve coincides with the closed position of the same valve.

Preferably, in a specific embodiment of the invention, the shutter is further rotatable towards a position of only partial opening of the valve, called subsistence position, for the passage of a minimal fluid flow. In this case, the aforesaid predetermined position can coincide with the subsistence position of the valve and/or with the closed position of the same valve.

Advantageously, the valve according to the present invention comprises an outside cover adapted to prevent the access to the locking member. Preferably, the outside cover comprises at least one through-hole for the passage of a security seal adapted to avoid the possible removal of the outside cover from the cap, the cap being provided with at least one through-hole arranged in a position corresponding to the afore said at least one through-hole of the cover.

Further object of the present invention is a locking and unlocking system for a shut-off valve for stopping a fluid flow according to the present invention.

The system comprises an unlocking tool couplable with the activating cap in order to move the valve locking member away from the main valve body.

Preferably, in case the movable locking element comprises an axial thread that can be reached by the afore said unlocking permission means, the unlocking tool comprises at least one coupling portion equipped with a thread designed to be constrained to the corresponding thread provided in the locking member of the valve.

Further object of the present invention is a locking and unlocking method for a shut-off valve for stopping a fluid flow of the type comprising a main valve body, a shutter rotatably mounted in the main valve body and an actuating cap (preferably provided with a relevant outside protective cover having an appropriate gripping spanner). The shutter being connected to the cap by an activating stem for allowing the shutter to be rotated between an open position of the valve for the passage of a fluid flow and a closed position of the valve in which the fluid flow is stopped. The valve also comprises inhibiting means to inhibit the rotation of the activating cap which are provided with at least one locking member movable between a retracted position and an extended position, the method comprising the steps of:
a) rotating the activating cap towards a predetermined position;
b) automatically locking the valve by moving the locking member from the retracted position to the extended position when the activating cap has reached the predetermined position.

According to an aspect of the present invention, during step b) an automatic movement of the locking member from at least one housing seat obtained in the activating cap towards at least one accommodating seat obtained in the main valve body is carried out, such that when the locking member is in the extended position, it engages both the afore said housing seat and the accommodating seat.

Preferably, the method also comprises a step of:
c) unlocking the valve by moving the locking member from the extended position to the retracted position.

Such a step c) occurs by moving the locking member away from the main valve body until the former has completely come out from the corresponding accommodating seat.

### Brief description of the figures

Further aspects and advantages of the present invention will be more evident from the following description, made for illustration purposes only and without limitation, referring to the accompanying schematic drawings, in which:
- figure 1 is a perspective view of a shut-off valve according to a specific embodiment of the present invention;
- figures 2A and 3A are sectional views of a specific embodiment of the shut-off valve according to the present invention when the activating cap is in open and closed position, respectively;
- figures 2B and 3B show a magnification of the sectional view of figures 2A and 3A, respectively;
- figure 4 is a perspective view of a locking and unlocking system for the shut-off valve shown in figure 1 according to a specific embodiment of the present invention;
- figures 5A and 6A are sectional views of a specific embodiment of the locking and unlocking system according to the present invention when the valve is locked and unlocked, respectively;
- figures 5B and 6B show a magnification of the sectional view of figures 5A and 6A, respectively.

### Embodiments of the invention

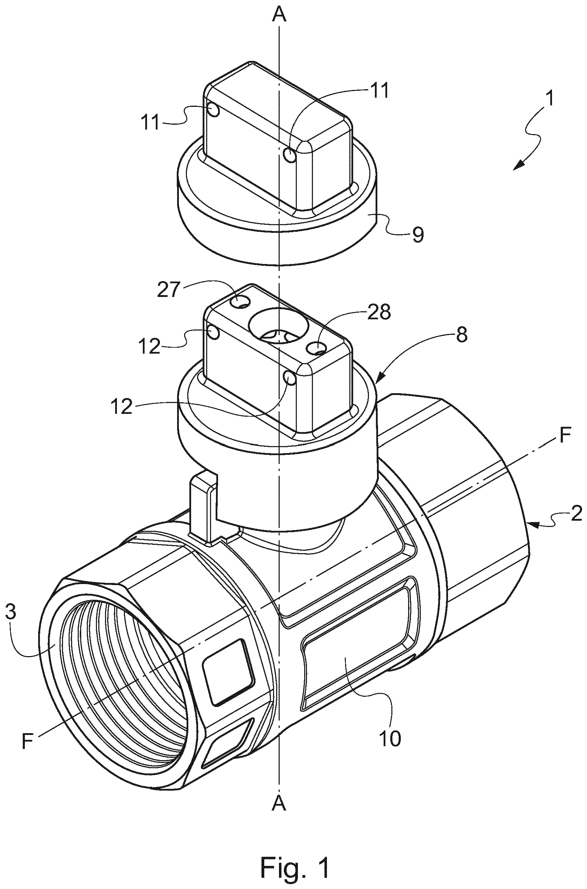

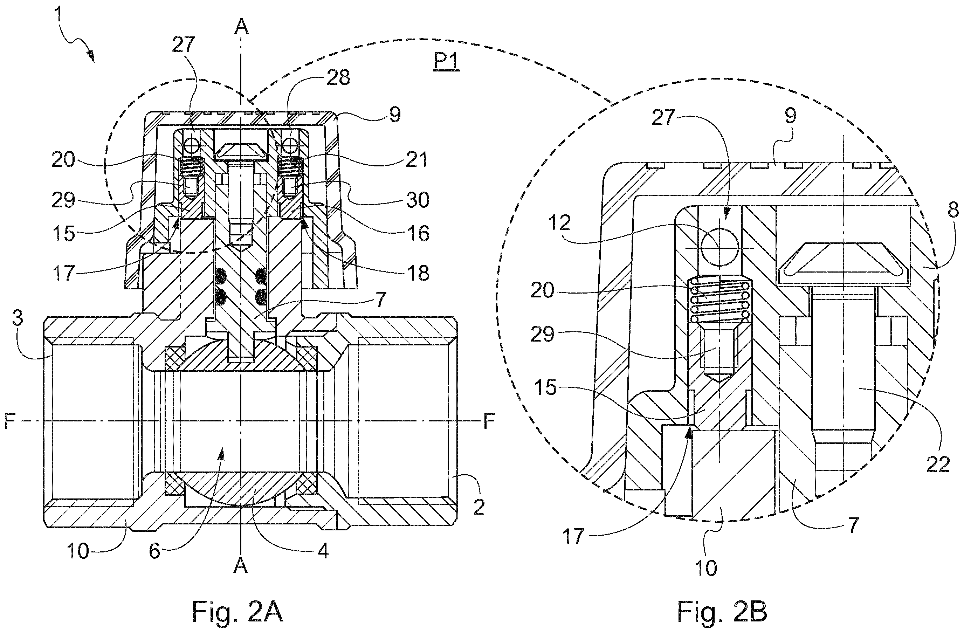

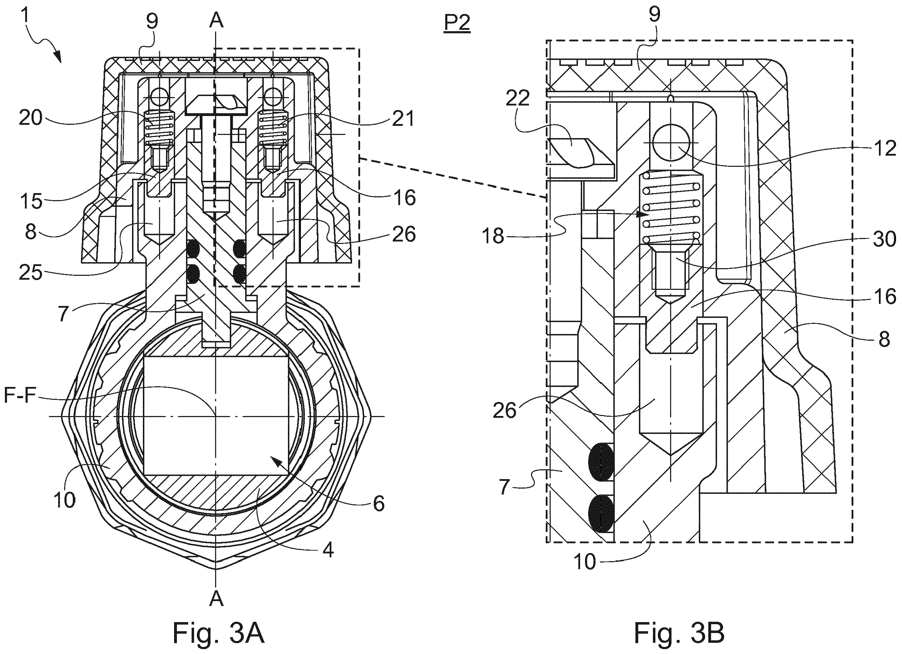

In figure 1, a shut-off valve 1 for stopping a fluid flow according to a specific embodiment of the present invention is shown. Specifically, the valve 1 comprises a main valve body 10 to whose ends a first and a second threaded fittings 2 and 3 are respectively arranged, for the connection to tubing for transporting a fluid, such as for example a riser column of the gas distribution mains or a water transportation duct. As can be seen in figures 2A and 3A, inside the main body 10 of the valve 1 a passage having a circular section is obtained in which the fluid passes along a direction F-F, and a substantially ball-shaped shutter 4 is rotatably arranged, which, being provided in turn with a diametrical through hole 6, is interposed between two legs of the afore said passage having a circular section for the passage of fluid.

The shutter 4 is rotatable around an axis A-A usually orthogonal to the axis of the through hole 6, i.e. for example vertical when the through hole 6 is horizontal, by an activating stem 7 arranged through the body 10 of the valve and constrained to a rotating activating cap 8. The rotation of such a cap 8 allows the substantially ball-shaped shutter 4 to be rotated between an open position, in which the through hole 6 of the ball shutter 4 allows the fluid passage in the valve body 10, and at least one closed position in which the fluid passage in the valve body 10 is avoided, for example the through-hole 6 of the substantially ball-shaped shutter 4 being arranged with its own axis orthogonal to the direction F-F of fluid passage in the valve 1.

The cap 8 is preferably constrained to the stem 7 by a screw 22 which can be screwed and unscrewed by a special tool (for example a screwdriver provided with an unconventional head). Of course, the substantially ball-shaped shutter 4 can be substituted by any other rotatable shutter known in the art, for example cylindrical, that is able to serve the same task.

In figure 1 the valve 1 is shown with the activating cap 8 arranged in a closed position. In this position, the fluid flow is stopped by the shutter 4 arranged with the axis of the through hole 6 orthogonal to the direction F-F of the fluid flow in the main body 10 of the valve 1 (the position shown in the sectional view of figure 3A).

The rotation of the cap 8 by an angle equal to ninety degrees allows the through-hole 6 of the shutter 4 to be arranged with the axis coincident with the direction F-F of the flow passage inside the body 10 of the valve and thus the valve to be arranged in open position (the position shown in the sectional view of figure 2A).

Note that some embodiments herein not shown of the valve object of the present invention can provide for the shutter 4 being further rotatable towards an additional position named "subsistence position" (not shown) for the passage of a minimal fluid flow through the valve. Specifically, the recent guidelines of the World Health Organization (W.H.O.) suggest the Governments to forbid, to the companies managing the water distribution, the complete forcible interruption of water delivery for the users in default. Therefore, the suppliers, in case of users in default, cannot stop delivering water to an inhabited home, but can restrict the delivery ensuring a minimal flow for the subsistence of the people inside the home.

The subsistence position, depending on the design of the valve shutter and/or the respective valve body which should be both substantially provided with a by-pass passage in order to allow the delivery of the afore said only minimal subsistence flow, can be obtained for example by rotating the ball shutter 4 by an angle of 180° from the afore said closed position of the valve. In other words, such a valve equipped with subsistence position allows the closed position or the subsistence position to be reached from the open position by simply rotating the ball shutter 4 by 90° clockwise or anticlockwise, respectively.

Turning to the herein shown embodiment, such a valve according to the present invention is further provided with reversible inhibiting means to inhibit the rotation of the activating cap 8, and thus of the shutter 4 connected thereto.

As it will be described in more detail in the following, the reversible inhibiting means prevent the activating cap from rotating when it is in a predetermined position, which preferably coincides with the closed position of the valve or, if present, with the subsistence position.

In case of the valve shown, the valve 1 according to the present invention can be freely brought from the open position to the closed one, by simply manually rotating the cap 8. When the valve 1 is in the closed position, the reversible inhibiting means automatically lock the activating cap 8 in such a position preventing the latter from rotating.

In case the valve is provided with a subsistence position, the reversible inhibiting means can be arranged such that the afore said predetermined locking position coincides with the subsistence position. More preferably, the reversible inhibiting means can be arranged symmetrically with respect to the vertical rotation axis A-A of the cap, such that in both the predetermined closed and subsistence positions, the cap is prevented from rotating.

Only by a proper tool which will be described more in detail in the following of the present description, the reversible inhibiting means can be moved from the locking position towards such a position that the cap rotation is unlocked.

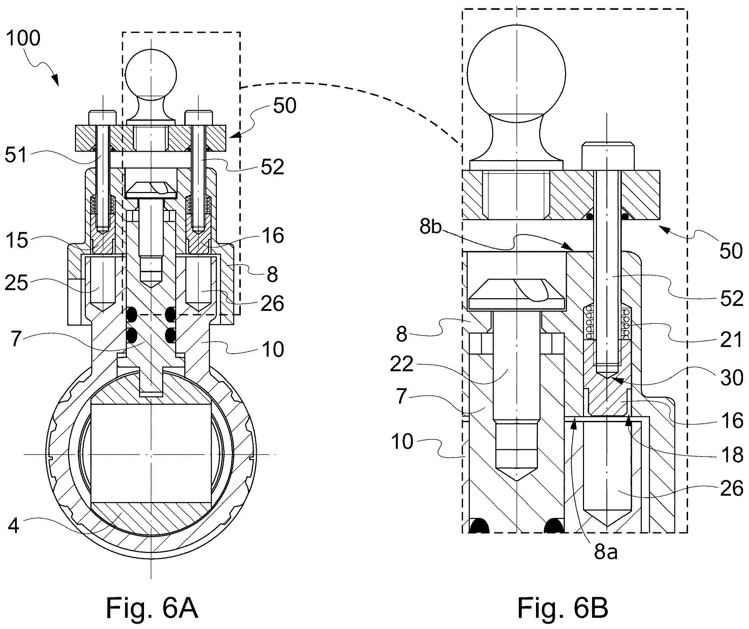

With reference to figures 2A, 2B, 3A and 3B, the reversible inhibiting means, according to a preferred aspect of the present invention, comprise two inhibiting pins 15 and 16 housed in two housing seats 17 and 18 obtained in the activating cap 8. Preferably, the housing seats 17, 18 accommodating the respective locking members (for example the inhibiting pins) 15, 16 are designed to allow, in use, the locking members 15, 16 to protrude from the activating cap 8 only from an outer surface 8a (depicted in figure 6B) of the activating cap 8, which is facing towards the surface of the valve body 10 on which the respective accommodating seat 25, 26 is made. Preferably, the inhibiting pins 15, 16 can be held in the cap 8 by, for example, caulking (riveting) the material such that, in case the cap 8 is disassembled from the valve, there is no risk for the pins 15, 16 to get lost.

Each of the two pins 15, 16 is movable inside the corresponding housing seat 17, 18 between a retracted position P1 (shown in figures 2A and 2B), in which the rotation of the activating cap 8 is allowed, and an extended position P2 (shown in figures 3A and 3B) in which a part of the pins, protruding from the activating cap 8, is engaged into a corresponding accommodating seat 25, 26 made in the main valve body 10, so as to prevent the cap 8 from rotating with respect to the main valve body 10.

Specifically, the pins 15, 16 arranged in their own housing seats 17, 18 made in the activating cap 8 are held during the rotation of the same cap 8 in their retracted position P1 by the surface of the valve body 10 to which such pins 15, 16 are facing and are allowed to reach the afore said extended position P2, when they are at the respective accommodating seats 25, 26 made in the same valve body 10.

Further embodiments herein not shown can however provide for example the reversible inhibiting means comprising just one pin or more than two pins, or having partially spherical shape or any other design allowing the same to be translated from the afore said retracted position PI, in which they are nearly entirely inside their housing seat, to their extended position P2 in which they are arranged at least partially inside their respective accommodating seat. Generally, the reversible inhibiting means comprise at least one movable locking member 15, 16 housed in at least one housing seat 17, 18 made in the activating cap 8 and able to move towards at least one accommodating seat 25, 26 obtained in the main body 10 of the valve 1.

Preferably, the reversible inhibiting means further comprise elastic means designed to hold the inhibiting pins 15, 16 in the extended position P2. The elastic means 20, 21, preferably constituted by helical springs, are arranged in the housing seats 17, 18 of the activating cap 8 so as to push each pin 15, 16 towards the valve body 10. In other words, the elastic means 20, 21 push the pins 15, 16 such that they protrude from the lower surface of the cap 8 towards the valve body 10.

Additional embodiments can provide the pins for being held in the extended position by means of just gravity, without the aid of elastic means. In this embodiment the valve should of course be mounted such that the movement direction of the pins 15, 16, between the retracted position and the extended position, is substantially parallel to the force of gravity, so that to exploit the latter to allow the pins 15, 16 to be engaged inside the accommodating seats 25, 26 of the valve body 10.

The two accommodating seats 25 and 26 of the valve 1 herein shown have sizes clearly compatible with the pins 15, 16, or at least with the respective ends facing the valve body 10. In case the pins 15, 16 have cylindrical shape, such accommodating seats 25, 26 can be obtained in the valve body 10 by making holes that are able to accommodate within at least part of the pins 15, 16, so as to effectively prevent the activating cap 8 from rotating.

Indeed, the accommodating seats 25 and 26 are properly arranged on the valve body 10 such that when the cap 8 is in the predetermined position, preferably the valve closed position or the subsistence position, the accommodating seats 25, 26 are aligned with the inhibiting pins 15 and 16 and the respective housing seats 17 and 18 obtained in the activating cap 8.

The housing seats 17 and 18 in the cap 8 are suitably shaped so that to allow the vertical movement of the inhibiting pins 15 and 16, preferably parallel to the rotation axis A-A of the shutter 4. Also, the housing seats 17 and 18 of the cap 8, in case the pins 15, 16 are of cylindrical shape, can be made as cylindrical holes that are able to accommodate within the same at least part of the pins 15, 16 and which, as it will be seen, are in communication with appropriate access openings 27, 28, so as to allow a proper unlocking tool to access the same pins 15, 16.

Preferably, the access openings 27, 28 are made on an outer surface 8b (depicted in figure 6B) of the activating cap 8, opposed to the previously described outer surface 8a of the cap 8.

According to a possible aspect, each access opening 27, 28 is shaped to prevent the corresponding locking member 15, 16 from protruding from the outer surface 8a of the activating cap 8, said outer surface 8a being opposed to the outer surface 8b of the cap facing towards the surface of the valve body 10.

Thus, typically at least one portion of the access openings 27, 28 has such sizes to prevent the corresponding locking member 15, 16 from crossing it. In other words, the section of at least one portion of the access openings 27, 28 has sizes that are smaller than the section of the corresponding locking member 15, 16.

The accommodating seats 25 and 26 are arranged so that when the valve is in the predetermined position, i.e. the cap 8 is in a predetermined angular position preferably corresponding to the closed position of the valve 1, they are aligned with the housing seats 17 and 18 and thus with the pins 15 and 16. In this position the pins 15 and 16 can thus at least partially enter the housing seats 25, 26 (in engagement position with the valve body, thus locking the rotation of the cap 8).

In other words, when the valve reaches the predetermined position (for example the closed position of the valve), as shown in figures 3A and 3B, the housing seats 17, 18 of the cap 8 and the accommodating seats 25, 26 of the valve body 10 substantially align to one another and thus the inhibiting pins 15 and 16, by effect of the force exerted by the springs 20, 21, enter the engagement position with the valve body 10, thus engaging at least part of the holes 25 and 26 correspondingly arranged thereon. By doing so, the cap 8 is prevented from rotating by the engagement of the pins 15, 16 in the respective accommodating seats 25, 26 and the valve 1 cannot be displaced from the closed position without the aid of an appropriate tool.

It is evident that, outside the predetermined position, the inhibiting pins 15 and 16 pushed towards the valve body 10 under the effect of the elastic force exerted by the springs 20 and 21, contact the upper surface of the valve body 10 but do not prevent the cap 8 from rotating, since they are not in the engagement position with the accommodating seats 25, 26 of the valve body 10.

The valve 1 further comprises unlocking permission means, which are designed to allow the inhibiting pins to be moved from their extended position P2 of engagement with the afore said accommodating seats 25, 26, to the retracted position PI, in which they are arranged inside the said housing seats 17, 18.

Preferably, the unlocking permission means comprise two access openings 27, 28 made in the activating cap 8 to make at least part of the inhibiting pins 15, 16 accessible from the outside of the cap 8. The access openings 27, 28 are thus in communication with the housing seats 17, 18 of the activating cap 8, i.e. such access openings 27, 28 can be the upper sections of holes obtained in such a cap 8, where such holes also serve as housing seats 17, 18 of the inhibiting pins 15, 16.

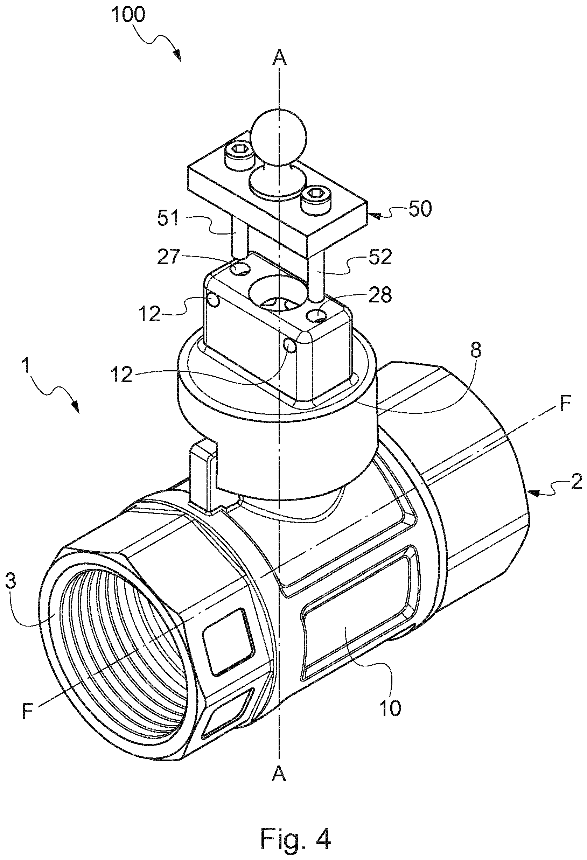

De facto, in reference to figures 2A, 2B, 3A, and 3B, the access openings 27, 28 are sections of through holes also defining the housing seats 17, 18 and having longitudinal axis substantially coincident with the movement direction of the inhibiting pins 15, 16. The housing seats 17, 18 of the cap 8, adapted to house all the inhibiting pins 15 and 16 and the respective elastic means 20 and 21, are in communication with the holes 27 and 28 through which said pins 15 and 16 can be accessed from the outside for the insertion of an appropriate tool 50 (shown in figure 4) adapted to unlock the rotation of the cap 8 by bringing back the inhibiting pins 15 and 16 outside the accommodating seats 25, 26 of the valve body.

In this way, as mentioned, such an unlocking tool 50 may reach the inhibiting pins 15, 16 from the outside of the activating cap 8 and, for example by being mechanically engaged by shape interference with the ends of such inhibiting pins 15, 16, may exert a pull action on such pins 15, 16 to bring them from their afore said extended position P2 to their retracted position P1.

Advantageously, the unlocking permission means further comprise a threaded hole 29, 30 made in each inhibiting pin 15, 16. The threaded holes 29, 30 have longitudinal axis substantially coincident with the movement direction of the inhibiting pins 15, 16 and can be coupled with threaded pegs, or screws, with which the unlocking tool 50 can be provided.

An additional alternative embodiment can provide for the unlocking permission means comprising a portion of the pins made of a ferromagnetic or magnetic material adapted to be attracted from the outside by an unlocking tool (not shown) provided with a magnetic or ferromagnetic portion, so as to be able to attract the inhibiting pins towards itself and away from the valve body outside the accommodating seats 25, 26. Such an embodiment is especially advantageous in case the valve is not provided with elastic means, for example in case the inhibiting pins are held in extended position just by the force of gravity.

In order to prevent the inhibiting pins 15, 16 from being accessed from the outside, i.e. for example the unlocking permission means, the valve 1 preferably comprises a safety cover 9 (shown in figure 1) provided with an appropriate grasping spanner, which is mounted at the upper part of the activating cap 8. The cover 9 can be made for example of plastic material and serves to cover the cap 8 and specifically the access openings 27 and 28.

The cover 9, in the herein shown embodiment, is provided with holes 11 for fastening and sealing to the cap 8 by usually employed means, for example a metal wire and related lead seal (or similar systems such as labels allowing the fluid draw-off or shut-off point to be targeted), both not depicted, which allow the incidental removal of the cover 9 to be avoided. The cap 8 is also provided with holes 12 arranged correspondingly with respect to those of the cover 9 for the passage of the sealing metal wire.

It has to be noted that the outside cover 9 can be made in different colors depending on the type of fluid being stopped by the valve, in order to facilitate and make safer the identification of the valve intended to be operated.

Preferably, the yellow color can be used for gas, the blue color for drinking water, the green color for untreated water (for example directly coming from wells), and the red color to denote the valve lock in case of user in default.

In figure 4 a locking and unlocking system 100 for the valve 1 according to a peculiar embodiment of the present invention is shown. The system 100 comprises, in addition to the afore described valve 1, also an unlocking tool 50 couplable with the activating cap 8 to move by pull the inhibiting pins 15, 16 of the valve 1 away from the valve body 10 of the valve.

Specifically, in the embodiment shown, the inhibiting pins 15, 16 are provided with axial threads that can be reached through the access openings 27, 28. The tool 50 comprises two coupling portions (one per each inhibiting pin 15, 16 of the valve) provided with a thread designed to be screwed in the threaded holes 29, 30 of such inhibiting pins 15, 16.

The use of the afore described shut-off valve 1 for stopping a fluid flow according to the present invention, to implement a locking and unlocking method of a shut-off valve for stopping fluids according to a particular aspect of the present invention, will be now described.

In the following description, a shut-off valve 1 for stopping a fluid, for example gas or water, will be referred to by way of example, which valve is arranged on a riser column or a distribution duct and initially provided, in a position of free rotation, for example in the open position, with a security cover 9.

Initially such a cover 9, preferably of plastic material, is installed on the activating cap 8 and is safely held to the latter by a security seal, preferably consisting of a metal wire and respective seal lead installed in the proper holes of the cover 9 and cap 8.

The seals make it possible to detect possible tampering and prevent the cover 9 of plastic material from being removed.

In case of need or in an emergency, the valve 1 according to the present invention can be freely operated and brought to closed - or subsistence - position without the need of specific tools, simply manually rotating the cover 9 and therefore the activating cap 8.

Once the cover 9 has been rotated and subsequently reached the closed - or subsistence - position of the valve, the reversible inhibiting means, and in particular the inhibiting pins 15 and 16, reach the extended position P2 and engage the holes 25 and 26 obtained correspondingly in the valve body 10.

Advantageously, the reversible inhibiting means to inhibit the rotation of the cap 8 allow avoiding that during the emergency, or in case of a user in default, the valve 1 can be re-opened without the use of an appropriate unlocking tool 50 thus allowing the passage of a fluid downstream of the valve 1.

In order to bring the valve 1 back to the open position, a qualified person, or a person in charge for the managing institution of the mains, by using a special unlocking tool 50 can displace the reversible inhibiting means from the extended position to the retracted position, by pulling them.

In order to do this, first of all the outside cover 9 should be removed, for example by breaking the respective seals and removing it, so that to have free access to the access openings 27, 28 of the cap 8, and thus the portions 51 and 52 of the special unlocking tool 50 must be inserted within the same openings.

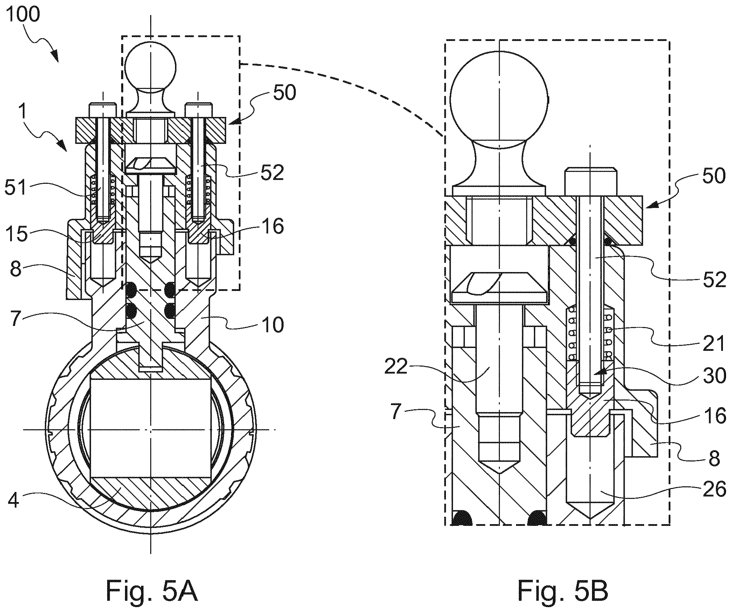

In figures 5A and 5B it can be seen that the portions 51, 52 of the tool 50 have been inserted in the access openings 27, 28 of the cap 8 and, by passing across the helical springs 20, 21, they reach the threaded holes 29, 30 obtained in the pins 15, 16. The helical springs 20, 21 are thus dimensioned to allow the passage of the portions 51, 52 of the tool 50.

Note that generally the elastic means 20, 21, when present, comprise a passage to allow the threaded holes 29, 30 to be reached by the portions 51, 52 inserted in the access openings 27, 28.

The threads of the portions 51, 52 of the tool 50 and the threaded holes 29, 30 are preferably not standard, such that the unlocking of the valve 1 cannot be obtained easily by unauthorized personnel, i.e. personnel which is not equipped with the appropriate unlocking tool 50.

The portions 51 and 52 of the tool 50, after being constrained to the pins, can be moved away from the valve body, by exceeding the elastic force of the springs 20 and 21 so as to allow the inhibiting pins 15 and 16 to be displaced from the extended position P2 of engagement with the valve body 10 to their retracted position P1 of disengagement (figures 6A and 6B), so that the cap 8 can be rotated until the open position of the valve has been reached.

Then the person in charge removes the tool 50 by disengaging the portions 51 and 52 from the holes 29 and 30 of the inhibiting pins 15, 16, and repositions the cover 9 on the cap 8, also installing, in case, new seals, so as to be able to detect subsequent valve tampering efforts.

Thanks to the present invention the same safety valve 1 can be thus used to lock the rotation of the activating cap 8 in a predetermined position in both an emergency case and in case of a user in default, thus allowing higher security than the previous known art. In fact, upon locking the valve in the predetermined position, the reversible inhibiting means can be brought back to the retracted position, to allow the rotation of the cap, by means of a special tool 50 allowing the reversible inhibiting means to be displaced away from the valve body. Such a characteristic makes the valve tampering hardly possible.

## Claims

1. Shut-off valve (1) for stopping a fluid flow, of the type comprising a main valve body (10), a shutter (4) rotatably assembled in said main valve body (10) and an activating cap (8), said shutter (4) being connected by a stem (7) to said activating cap (8) to rotate the shutter (4) between at least one open position of the valve for the passage of the fluid flow and a closed position of the valve in which the fluid flow is stopped, said valve (1) comprising reversible inhibiting means to inhibit the rotation of said activating cap (8) when said activating cap (8) is in a predetermined position, said valve being **characterized in that** said reversible inhibiting means comprise at least one locking member (15, 16) accommodated in at least one housing seat (17, 18) made in said activating cap (8), said at least one locking member (15, 16) being movable between a retracted position (P1), in which the rotation of the activating cap (8) is allowed, and an extended position (P2), in which part of said at least one locking member (15, 16), protruding from the activating cap (8), gets into at least one accommodating seat (25, 26) made on said main valve body (10) so that the rotation of the activating cap (8), with respect to the main valve body (10), is prevented,
and **in that** it comprises unlocking permission means to permit the unlocking, said unlocking permission means being designed to move said at least one locking member (15, 16) from said extended position (P2) to said retracted position (P1).

2. Valve (1) according to claim 1, wherein said reversible inhibiting means comprise elastic means (20, 21) designed to automatically push said at least one locking member (15, 16) into at least one accommodating seat (25, 26) made on the valve body (10) and to hold it in said extended position (P2).

3. Valve (1) according to claim 2, wherein said elastic means (20, 21) are arranged in said at least one housing seat (17, 18) of said activating cap (8).

4. Valve (1) according to claim 2 or 3, wherein said elastic means (20, 21) comprise at least one helical spring.

5. Valve (1) according to any one of the preceding claims, wherein said unlocking permission means comprise at least one access opening (27, 28) made in said activating cap (8), said at least one access opening (27, 28) being in communication with said at least one housing seat (17, 18) of said activating cap (8).

6. Valve (1) according to claim 5, wherein said at least one access opening (27, 28) comprises at least one through-hole having longitudinal axis substantially coincident with the movement direction of said at least one locking member (15, 16).

7. Valve (1) according to claim 5 or 6, wherein said unlocking permission means comprise at least one threaded hole (29, 30) made in said at least one locking member (15, 16), said at least one threaded hole (29, 30) having longitudinal axis substantially coincident with the movement direction of said at least one locking member (15, 16).

8. Valve (1) according to anyone of the preceding claims, wherein said at least one locking member (15, 16) comprises one or more pins arranged parallel to said stem (7).

9. Valve (1) according to anyone of the preceding claims, wherein said predetermined position coincides with the closed position of the valve.

10. Valve (1) according to anyone of the preceding claims, wherein said shutter (4) is further rotatable towards another subsistence position of the valve for the passage of a minimum fluid flow, said predetermined position being coincident with said subsistence position of the valve.

11. Valve (1) according to anyone of the preceding claims, comprising an outside cover (9) to prevent the access to said at least one locking member (15, 16).

12. Valve (1) according to claim 11, wherein said outside cover (9) comprises at least one through-hole (11) for the passage of a security seal adapted to avoid the possible removal of the outside cover (9) from the cap (8), said cap (8) being provided with at least one through-hole (12) arranged in a position corresponding to said at least one through-hole (11) of said cover (9).

13. System (100) for locking and unlocking a shut-off valve (1) for stopping a fluid flow according to anyone of the preceding claims, said system (100) comprising an unlocking tool (50) couplable with said activating cap (8) to move said at least one locking member (15, 16) of said valve away from the main valve body (10) of said valve.

14. System (100) according to claim 13, wherein said unlocking tool (50) comprises at least one coupling portion (51, 52) provided with a thread designed to be constrained to a corresponding thread (29, 30) equipped in said at least one locking member (15, 16) of said valve (1).

15. Method of locking and unlocking a shut-off valve (1) for stopping a fluid flow, of the type comprising a main valve body (10), a shutter (4) rotatably assembled in said main valve body (10) and an activating cap (8), said shutter (4) being connected by a stem (7) to said activating cap (8) to rotate the shutter (4) between an open position of the valve for the passage of the fluid flow and a closed position of the valve in which the fluid flow is stopped, said valve (1) comprising reversible inhibiting means to inhibit the rotation of said activating cap (8) which are provided with at least one locking member (15, 16) movable between a retracted position (P1) and an extended position (P2), said method comprising the steps of:
a) rotating said activating cap (8) towards a predetermined position;
b) locking said valve (1) by moving said at least one locking member (16, 15) from said retracted position (P1) to said extended position (P2), when said activating cap (8) has reached said predetermined position;
wherein said step b) occurs by moving said at least one locking member (15, 16) from at least one housing seat (17, 18) obtained in said activating cap (8) towards at least one accommodating seat (25, 26) obtained in said main valve body (10), so that when said at least one locking member (15, 16) is in said extended position (P2) it engages both said at least one housing seat (17, 18) and said at least one accommodating seat (25, 26).

16. Method according to claim 15, comprising a step of:
c) unlocking said valve (1) by moving said at least one locking member (15, 16) from said extended position (P2) to said retracted position (PI);
wherein said step c) occurs by moving said at least one locking member (15, 16) away from said main valve body (10) until the former has completely come out from said at least one accommodating seat (25, 26).
